# EUROPEAN PATENT APPLICATION

(11) **EP 1 566 685 A2**
(43) Date of publication of application: **24.08.2005**
(21) Application number: 05290364.8
(22) Date of filing: 17.02.2005
(51) Int. Cl.: G02F 1/1335, G02F 1/13357, G02B 3/00

(54) **Liquid crystal display device with backlight unit using microlens array and fabricating method of microlens array**

(30) Priority: 23.02.2004 KR 2004011988
(71) Applicant: LG Electronics, Inc., Seoul 150-875 (KR); LG Micron Ltd., 730-400 Gyengsang buk-do (KR)
(72) Inventor: Yee, Young-Joo, Bundang-gu, Seongnam, Gyeonggi-do (KR); Lee, Gun-Woo, Dalseo-gu, Daegu (KR); Park, Ki-Won, Dongan-gu, Anyang, Gyeonggi-Do (KR); Seong, Dong-Mug, Ansan, Gyeonggi-Do (KR)
(74) Representative: Loisel, Bertrand

(57) **Abstract**

An LCD device comprises: a light irradiating portion; a microlens array having a plurality of microlenses for collecting light emitted from the light irradiating portion; and a liquid crystal panel having a plurality of unit pixels, each unit pixel matching with the plural microlenses, for displaying an image by passing light that has been collected into the microlens array through each unit pixel. According to this, a color degradation is reduced, a viewing angle is increased, a fabrication cost is reduced, and fabrication time is shortened.

## Description

### BACKGROUND OF THE INVENTION

### 1. Field of the Invention

The present invention relates to a liquid crystal display (LCD) device with a backlight unit using a microlens array and a fabricating method of the microlens array.

### 2. Description of the Conventional Art

Recently, a demand for an LCD device that realizes a large screen and a high picture quality is gradually increased. However, it is difficult to make an LCD device using the conventional cathode ray tube (CRT) slim and to realize a large screen more than a certain size. According to this, a flat panel display (FPD) that can become slim and realize a large screen and a high picture quality is being spotlighted, and a research for the FPD is being actively performed.

An LCD is one of the most spotlighted flat panel display.

The LCD device applies an electric-optical characteristic of liquid crystal, a middle phase between liquid and solid, to a display device. A principle that an arrangement of an organic molecule constituting liquid crystal having fluidity such as liquid is changed by an external electric field is applied to the LCD device.

However, the LCD device has a brightness and a viewing angle inferior to those_of a display device using a spontaneous light emitting method. According to this, various researches for a backlight unit for enhancing a brightness of the LCD device are being performed.

As a method for enhancing a brightness of the LCD device, there is a method for increasing a light emitting amount of an optical source itself. However, if a light emitting amount of an optical source itself is increased, a heating value of the optical source is increased. Also, since the LCD device is mainly applied to a portable device, if consumption power for maintaining the heating value of the optical source is increased, a battery usage time of the portable device is drastically decreased.

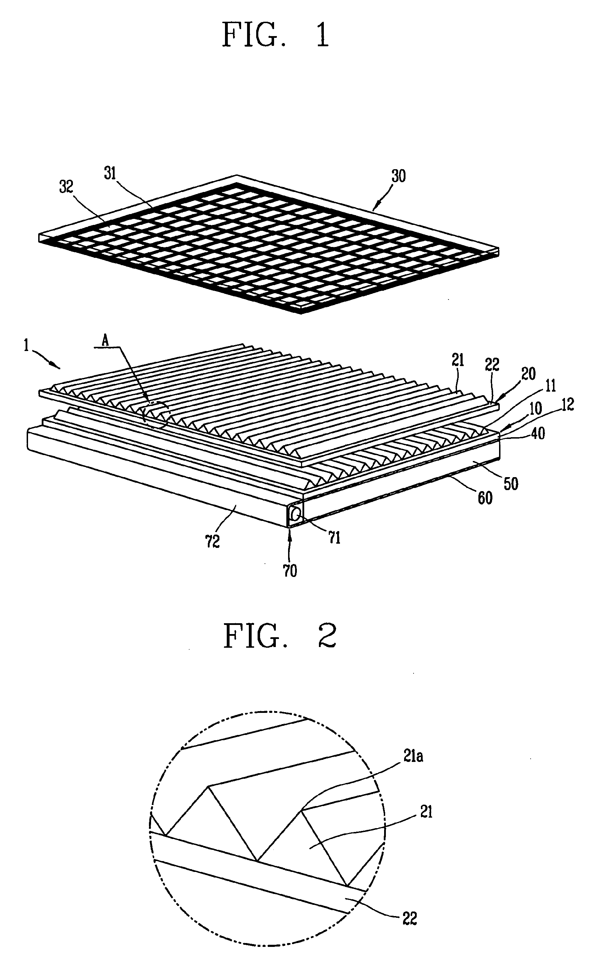

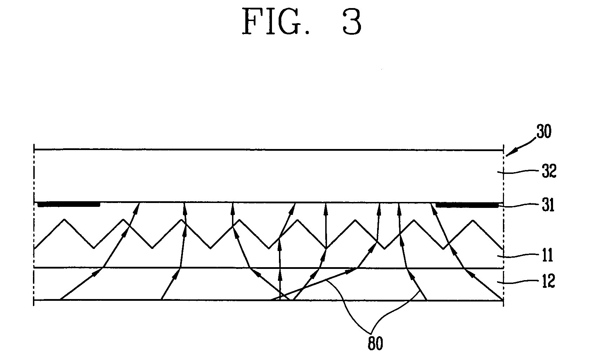

FIG. 1 shows an LCD device using a backlight unit in accordance with the conventional art, FIG. 2 is an enlargement view of 'A' part of FIG. 1, and FIG. 3 is a conceptual view showing a light collecting function of the backlight unit in accordance with the conventional art.

As shown, the conventional backlight unit 1 applied to an LCD device comprises: a first prism sheet 10; a second prism sheet 20 arranged at a front surface of the first prism sheet 10 in a perpendicular state to the first prism sheet 10; a liquid crystal panel 30 formed at a front surface of the second prism sheet 20; an optical diffuser 40 formed at a lower surface of the first prism sheet 10; a light guiding plate 50 formed at a lower surface of the first prism sheet 10 for passing light; and a reflection plate 60 formed at a lower surface of the light guiding plate 50 for reflecting light.

A lamp 71, a light source is positioned at a side surface of the light guiding plate 50, and the lamp 71 is provided with a lamp cover 72 for reflecting light irradiated from the lamp 71 to the light guiding plate 50.

The prism sheets 10 and 20 are respectively composed of: a plurality of prism lenses 11 and 21 minutely arranged to refract a light path; and transparent substrates 12 and 22 formed of glass, etc. and on which the prism lenses 11 and 21 are mounted.

The liquid crystal panel 30 includes: a black matrix 31 formed on the transparent substrate with a lattice shape for dividing pixels; and a unit pixel 32 formed between the black matrixes 31.

As shown in FIG. 3, according to the backlight unit of an LCD device, light 80 emitted from the light guiding plate 50 passes through the optical diffuser 40 and then passes through the first and second prism lenses 11 and 21. The light 80 is refracted two times in each perpendicular direction thereby to be collected into the liquid crystal panel 30.

However, the conventional LCD device with the backlight unit formed of a prism lens has the following problems.

Since light emitted from the light guiding plate has to collected into the liquid crystal panel after being refracted two times in a horizontal direction and a vertical direction, two expensive prism lens sheets have to be provided and thereby the entire fabrication cost is increased.

Also, since light irradiated to the liquid crystal panel is bi-refracted by passing through two prism lenses having a sectional shape of a triangle, a divergence angle is very wide and thereby a viewing angle and a brightness are degraded.

As shown in FIG. 2, since an apex 21 a of the prism lens is very sensitive to a scratch, a user has to pay minute attention not to scratch the surface of the prism lens at the time of an assembly operation. According to this, a divergence angle of irradiated light is much more degraded and a phase difference is increased. By the increased phase difference, a chromatic aberration is generated thereby to degrade a viewing angle and a brightness.

### SUMMARY OF THE INVENTION

Therefore, an object of the present invention is to provide an LCD device with a backlight unit using a microlens array capable of reducing a fabrication cost by having a simplified structure, capable of being minutely fabricated, and capable of providing a picture quality without a color distortion in a wide viewing angle by increasing a brightness and by removing a chromatic aberration due to a phase difference.

Another object of the present invention is to provide a fabricating method of a microlens array capable of enhancing a uniform degree and a yield by easily fabricating the same microlens arrays with a repetitive duplication.

To achieve these and other advantages and in accordance with the purpose of the present invention, as embodied and broadly described herein, there is provided an LCD device comprising: a light irradiating portion; a microlens array having a plurality of microlenses for collecting light emitted from the light irradiating portion; and a liquid crystal panel for displaying an image by passing light that has been collected into the microlens array.

To achieve these and other advantages and in accordance with the purpose of the present invention, as embodied and broadly described herein, there is also provided a fabricating method of a microlens array comprising: fabricating a plating frame having the same shape as the microlens array; fabricating a mold to fabricate the microlens array by using the plating frame; and duplicating the microlens array by using the mold.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.
In the drawings:
FIG. 1 is a disassembled perspective view showing an LCD device with a backlight unit in accordance with the conventional art;
FIG. 2 is an enlargement view of 'A' part of FIG. 1;
FIG. 3 is a conceptual view showing a light collecting function of a backlight unit in accordance with the conventional art;
FIG. 4 is a disassembled perspective view showing an LCD device with a backlight unit using a microlens array according to one embodiment of the present invention;
FIG. 5 is a lateral view of the microlens array taken along line V-V of FIG. 4;
FIG. 6 is a lateral view of the microlens array taken along line VI-VI of FIG. 4;
FIG. 7 is a plane view showing a state that a liquid crystal panel and the microlens array of FIG. 4 are arranged;
FIG. 8 is a conceptual view showing a light collecting function of a backlight unit using a microlens array according to the present invention;
FIGs. 9 to 12 are views showing a fabricating method of a microlens array applied to an LCD device according to one embodiment of the present invention; and
FIG. 13 is a disassembled perspective view showing an LCD device with a backlight unit using a microlens array according to another embodiment of the present invention.

### DETAILED DESCRIPTION OF THE PREFERRED EMBODIMENTS

Reference will now be made in detail to the preferred embodiments of the present invention, examples of which are illustrated in the accompanying drawings.

Hereinafter, an LCD device with a backlight unit using a microlens array and a fabricating method of the microlens array will be explained in more detail.

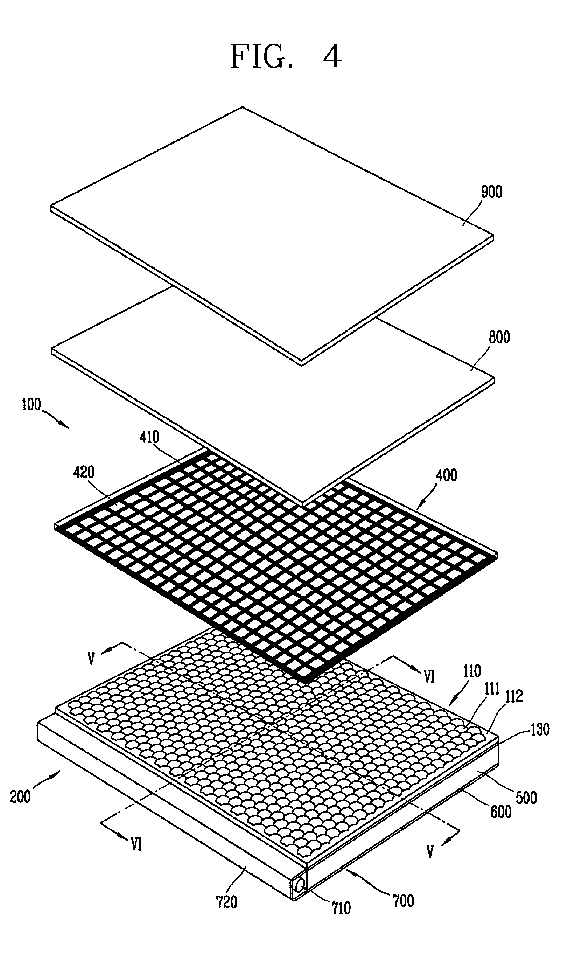

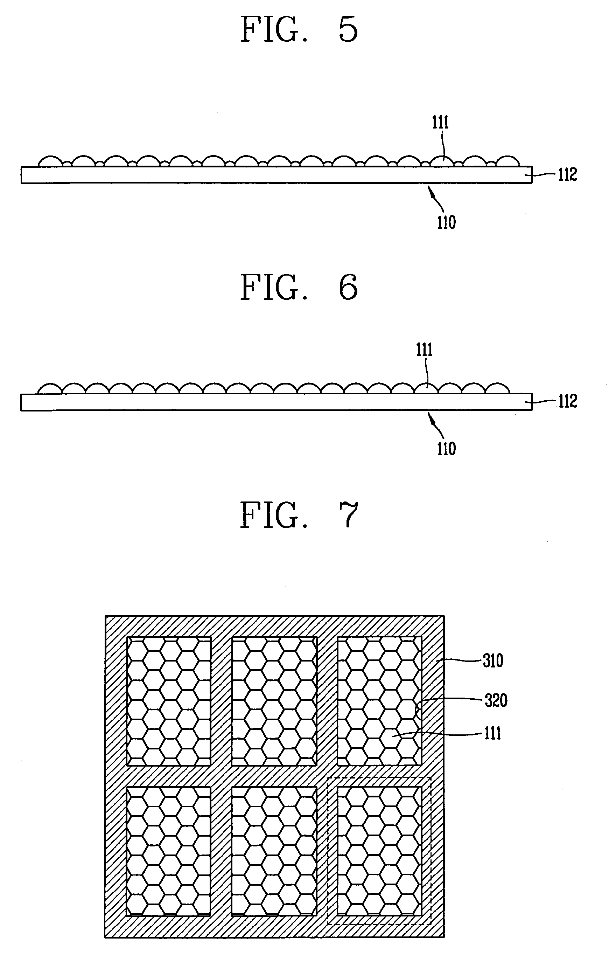

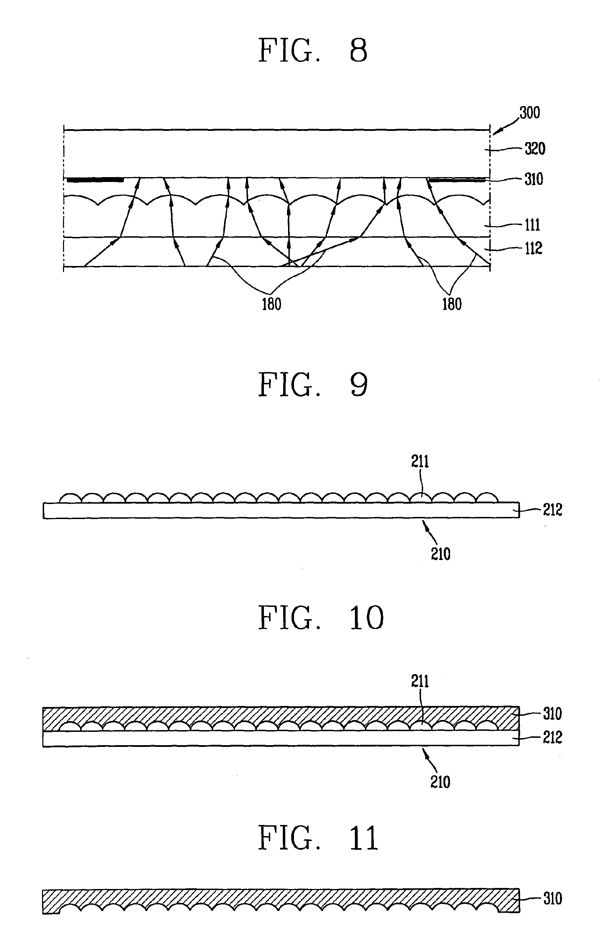

FIG. 4 is a disassembled perspective view showing an LCD device with a backlight unit using a microlens array according to one embodiment of the present invention, FIG. 5 is a lateral view of the microlens array taken along line V-V of FIG. 4, FIG. 6 is a lateral view of the microlens array taken along line VI-VI of FIG. 4, FIG. 7 is a plane view showing a state that a liquid crystal panel and the microlens array of FIG. 4 are arranged, and FIG. 8 is a conceptual view showing a light collecting function of a backlight unit using a microlens array according to the present invention.

As shown, the LCD device with a backlight unit using a microlens array according to one embodiment of the present invention comprises: a liquid crystal panel 100 for displaying an image; and a backlight unit 200 positioned at one surface of the liquid crystal panel 100, for irradiating light on the liquid crystal panel 100.

The liquid crystal panel 100 includes: a black matrix 410 formed on one surface of a transparent substrate 400 with a lattice shape, for dividing pixels; and a plurality of unit pixels 420 formed on the black matrix 410.

The backlight unit 200 includes: a light irradiating portion 150 for generating light; and a microlens array 110 having a plurality of microlenses 111 for collecting light emitted from the light irradiating portion 150.

The microlens array 110 is positioned between the light irradiating portion 150 and one surface of the liquid crystal panel 100 where the black matrix 410 is formed.

The plural microlenses 111 of the microlens array 110 are arranged on one surface of a transparent substrate 112, and the microlenses 111 are positioned to face the liquid crystal panel 100.

Since the microlens array 110 has to have an excellent light transmittance, it is preferably formed of the following materials.

That is, the microlenses 111 are formed of a transparent material such as a ultraviolet setting resin, a thermosetting resin, or glass. Also, the transparent substrate 112 on which the microlenses 111 are mounted is preferably formed of resin such as PMMA, PET, polycarbonate, etc. or glass.

Each microlens 111 can be formed as a spherical shape having a constant radius in every direction perpendicular to optical axis that is made to be vertically incident on one surface of the microlens array 110. Also, each microlens 111 can be formed as an aspheric shape having an conic coefficient and different curvature radius in two axes perpendicular to the optical axis. According to this, irradiated light can be effectively collected into the liquid crystal panel 100 through only one microlens array 110.

The microlens 111 can be formed as a spherical shape having a constant curvature radius in every direction perpendicular to an optical axis, or can be formed as an aspheric shape having an conic coefficient and having different curvature radiuses in two axes perpendicular to an optical axis.

However, in order to improve a light collecting function and a picture quality of the liquid crystal panel, the microlens 111 is preferably formed as an aspheric shape.

As shown in FIGs. 5 and 6, the microlenses 111 are closely arranged not to have an air gap therebetween. That is, the microlens array 110 is formed to have a full fill factor. Even if the microlenses 111 are closely arranged, an air gap is generated between each microlens 111 due to its own shape. In order to fill the air gaps, a gap filling layer (not shown) is formed on the microlens array.

In the microlens array 110 formed to have a full fill factor, the plural microlenses 111 are preferably arranged as a hexagonal closely packed structure of a honeycomb shape. Also, the microlenses 111 can be arranged as a rectangular closely packed structure of an orthogonal form.

It is also possible that the microlens array is formed as a circle shape, an oval shape, etc.

That is, as the microlenses are arranged to have a full fill factor, an unnecessary optical loss can be reduced. According to this, light irradiated from a light irradiating portion 700 is effectively collected into the liquid crystal panel 100 thereby to enhance a brightness of the LCD device.

A size of the microlens 111 has to be small enough to have a diameter and a height corresponding to a several micron to tens of micron.

As shown in FIG. 7, since each microlens 111 is formed to be smaller than the unit pixel 420 formed on the liquid crystal panel 100, plural microlenses 111 can be distributed in each unit pixel 420 when the microlens array 110 and the liquid crystal panel 100 are aligned to each other.

According to this, it is unnecessary to align the liquid crystal panel 100 and the microlens array 110 so that one microlens 111 can correspond to each unit pixel 420 of the liquid crystal panel 100. Therefore, an assembly process is facilitated thus to reduce a fabrication cost. Without the above one-to-one alignment process between the microlens array and the liquid crystal panel, a light collecting function is maintained, ununiform brightness of the LCD device is prevented, and an optical loss is minimized.

An optical diffuser 130 is formed at one surface of the microlens array 110 facing the light irradiating portion 700 is integrally formed to distribute irradiated light with a proper divergence angle.

The optical irradiating portion 700 includes: a lamp 710 for irradiating light; a light guiding plate 500 positioned at one side of the lamp 710, for guiding light irradiated from the lamp 710 to the microlens array 110; a lamp cover 720 for covering the lamp 710 in order to reflect light irradiated from the lamp 710 to the light guiding plate 500; and a reflecting plate 600 formed at one surface of the light guiding plate 500, for reflecting light irradiated from the lamp 710 to the microlens array 110.

As the lamp 710, a cold cathode fluorescent lamp (CCFL) is mainly used. The lamp 710 is disposed at a side surface of the light guiding plate 500 and emits light to the microlens array 110 through the light guiding plate 500. At this time, the lamp cover 720 effectively reflects light irradiated from the lamp 710 to the light guiding plate 500.

The light irradiating portion 700 and the microlens array 110 are aligned as a unit at a rear surface of the liquid crystal panel 100.

Preferably, an optical diffuser 800 for increasing a viewing angle is provided at a surface of the liquid crystal panel 100 where an image is to be displayed. Also, it is preferable that a liquid crystal protecting plate 900 for protecting the liquid crystal panel 100 is further provided on the optical diffuser 800.

Hereinafter, an operation of the LCD device with a backlight unit using a microlens array according to one embodiment of the present invention will be explained.

Light irradiated from the lamp 710 of the light irradiating portion 700 is reflected on the lamp cover 720 thereby to be transmitted to the light guiding plate 500. Then, the light is guided by the light guiding plate 500 and changes its progressing path to be towards the microlens array 110 by the reflecting plate 600 mounted at one surface of the light guiding plate 500 as shown in FIG. 8. The light that has been guided by the light guiding plate 500 and the reflecting plate 600 passes through the microlenses 111 and is collected into every direction perpendicular to an optical axis. Since the plural microlenses 111 are closely arranged in the unit pixel 420 of the liquid crystal panel 100, the collected light is effectively made to be incident into the unit pixels 420 of the liquid crystal panel 100 thereby to display an image on the liquid crystal panel 100.

Hereinafter, fabrication processes of the microlens array 110 will be explained.

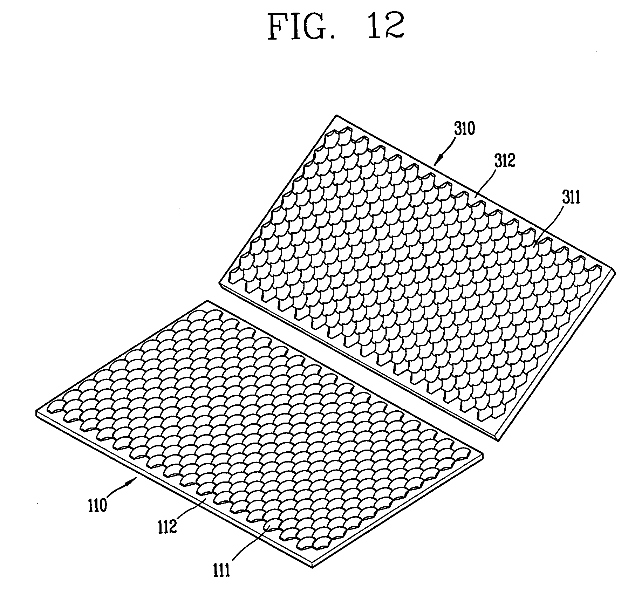

FIGs. 9 to 12 are views showing a fabricating method of a microlens array applied to an LCD device according to one embodiment of the present invention.

As shown, a fabricating method of a microlens array according to one embodiment of the present invention comprises: fabricating a plating frame 210 having the same shape as the microlens array 110; fabricating a mold 310 having a reverse image of the microlens array 110 at one surface thereof by using the plating frame 210; and duplicating the microlens array 110 by using the mold 310.

The step of fabricating the plating frame 210 includes: forming a layer formed of photoresist or photosensitive polymer at one surface of a substrate 212; patterning the microlens array by using a lithography; forming the microlenses 211 as a spherical shape by a reflow method using a thermal processing; and filling an air gap between each microlens 211 so that the microlens array can have a full fill factor.

The layer of the photoresist or the photosensitive polymer is formed by a coating method, a deposition method, a lamination method, etc.

Also, the step of fabricating a mold includes: plating a metal on a surface of the plating frame 210 where the microlenses 211 are formed by an electrolytic method or a non-electrolytic method; and detaching the plated metal from the plating frame 210 and thereby fabricating the mold 310 on which a reverse image of the microlens array is transferred.

As the above plated metal, nickel is preferably used. However, other kinds of metal can be used.

The step of duplicating the microlens array includes: coating a ultraviolet setting resin having fluidity on the transparent substrate 112; pressing the ultraviolet setting resin on a surface of the mold 310 where a reverse image of the microlens array 110 is formed; hardening the ultraviolet setting resin by irradiating ultraviolet rays; and detaching the transparent substrate 112 where the ultraviolet setting resin is formed from the mold 310.

Also, the step of duplicating the microlens array includes: coating a thermo setting resin having fluidity on the transparent substrate 112; pressing the thermo setting resin on a surface of the mold 310 where a reverse image of the microlens array 110 is formed; hardening the thermosetting resin by heating for a certain time with a certain temperature; and detaching the transparent substrate 112 where the thermosetting resin is formed from the mold 310.

As a hot press embossing method, the step of duplicating the microlens array includes: pressing the transparent substrate 112 on a surface of the mold 310 where a reverse image of the microlens array 110 is formed; heating the transparent substrate so as to have fluidity and thereby transferring a shape of the microlens array 110 to the transparent substrate 112; and cooling the mold 310 and the transparent substrate 112 and detaching the transparent substrate 112 from the mold 310.

As an injection molding method, the step of duplicating the microlens array is performed by using the mold 310 as a master and injecting a transparent resin having a certain refractivity onto a surface of the mold 310 where a reverse image of the microlens array 110 is formed with a comparatively high temperature and high pressure.

More preferably, an optical diffuser 130 is formed at an opposite surface to one surface of the microlens array 110 where the microlenses 111 are formed.

The optical diffuser 130 is formed on the microlens array as a unit by a heating lamination method or by using an index matching adhesive.

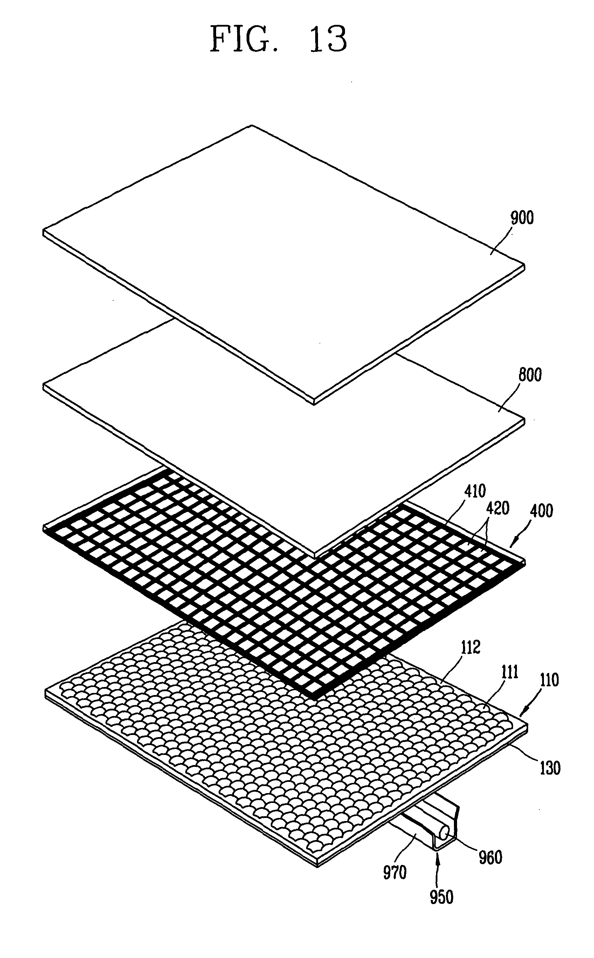

FIG. 13 is a disassembled perspective view showing an LCD device with a backlight unit using a microlens array according to another embodiment of the present invention, in which other components except a light irradiating portion 950 are equal to the aforementioned components.

The light irradiating portion 950 is composed of a lamp 960 and a lamp cover 970, and is positioned at a rear surface of the microlens array 110. At least one light irradiating portion 950 can be installed. An LCD device capable of directly irradiating light as the light irradiating portion 950 is positioned at a rear surface of the microlens array is suitable for a display device having a large screen such as an LCD TV.

As aforementioned, the LCD device of the present invention comprises: a light irradiating portion; a microlens array having a plurality of microlenses for collecting light emitted from the light irradiating portion; and a liquid crystal panel for displaying an image by passing light that has been collected into the microlens array. Since light irradiated on the liquid crystal panel via the microlenses of a spherical shape or an aspheric shape has a narrower divergence angle than light which passes through the conventional prism structure, a color degradation caused by a phase difference due to a birefringence while light passes through the liquid crystal panel is reduced and a brightness inversion angle is increased. According to this, a viewing angle is substantially increased.

In the present invention, one microlens array can substitute the conventional two prism lens sheets thereby to fabricate the LCD device with a low cost. Also, since the microlens has a smooth curved surface, a damage of the microlens is minimized thereby to easily deal with the microlens at the time of an assembly operation and to reduce fabricating time.

Also, since a plurality of the microlenses are formed in each unit pixel of the liquid crystal panel, each unit pixel of the liquid crystal panel needs not to be aligned with each microlens one by one. According to this, an assembly process is facilitated and a fabrication cost is reduced. Without the one-to-one alignment between the microlens and the unit pixel of the liquid crystal panel, a light collecting function is maintained, ununiform brightness of the LCD device is prevented, and an optical loss is minimized thereby to enhance a yield of the product.

Additionally, in the present invention, the mold for fabricating the microlens array is fabricated by using the plating frame, thereby repeatedly duplicating the same microlens array sheets by the mold.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An LCD device comprising:
a light irradiating portion;
a microlens array having a plurality of microlenses for collecting light emitted from the light irradiating portion; and
a liquid crystal panel for displaying an image by passing light that has been collected into the microlens array.

2. The LCD device of claim 1, wherein the microlens array is formed of a plurality of aspheric microlenses.

3. The LCD device of claim 2, wherein the aspheric microlenses have different spheric coefficients in two axes perpendicular to optical axis that is made to be vertically incident on the microlens array.

4. The LCD device of claim 3, wherein the aspheric microlens has an conic coefficient.

5. The LCD device of claim 1, wherein the microlens array is formed of a plurality of spheric microlenses.

6. The LCD device of claim 1, wherein the microlenses of the microlens array are arranged on a transparent substrate.

7. The LCD device of claim 1, wherein the plural microlenses are arranged as a hexagonal closely packed structure of a honeycomb shape.

8. The LCD device of claim 1, wherein the plural microlenses are arranged as a rectangular closely packed structure of an orthogonal form.

9. The LCD device of claim 1, wherein the microlens array is formed to have a full fill factor.

10. The LCD device of claim 1, wherein the microlens is formed to have a diameter and a height corresponding to a several micron to tens of micron.

11. The LCD device of claim 1, wherein the liquid crystal panel includes a black matrix for dividing the liquid crystal panel so that a plurality of unit pixels can be formed at one surface thereof, and the microlens array and the liquid crystal panel are aligned to each other so that a plurality of microlenses can be arranged in each unit pixel.

12. The LCD device of claim 1, wherein an optical diffusing layer is formed at one surface of the microlens array facing the light irradiating portion.

13. The LCD device of claim 1, wherein the light irradiating portion includes:
a lamp for irradiating light;
a light guiding plate positioned at one side of the lamp, for guiding light irradiated from the lamp to the microlens array;
a lamp cover for covering the lamp in order to reflect light irradiated from the lamp to the light guiding plate; and
a reflecting plate formed at one surface of the light guiding plate, for reflecting light irradiated from the lamp to the microlens array.

14. The LCD device of claim 1 further comprising an optical diffuser for increasing a viewing angle at a surface of the liquid crystal panel where an image is to be displayed.

15. The LCD device of claim 14 further comprising a liquid crystal protecting plate for protecting the liquid crystal panel on the optical diffuser.

16. An LCD device comprising:
a light irradiating portion;
a microlens array having a plurality of microlenses for collecting light emitted from the light irradiating portion; and
a liquid crystal panel having a plurality of unit pixels, each unit pixel matching with the plural microlenses, for displaying an image by passing light that has been collected into the microlens array through each unit pixel.

17. A fabricating method of the microlens array of the LCD device of claim 1 comprising:
fabricating a plating frame having the same shape as the microlens array;
fabricating a mold having a reverse image of the microlens array at one surface thereof by using the plating frame; and
duplicating the microlens array by using the mold.

18. The method of claim 17, wherein the step of fabricating the plating frame includes:
forming a layer formed of photoresist or photosensitive polymer at one surface of a substrate;
patterning the microlens array by using a lithography;
forming the microlenses as a spherical shape by a reflow method using a thermal processing; and
filling an air gap between each microlens so that the microlens array can have a full fill factor.

19. The method of claim 17, wherein the step of fabricating a mold includes:
plating a metal on a surface of the plating frame where the microlenses are formed by an electrolytic method or a non-electrolytic method; and
detaching the plated metal from the plating frame and thereby fabricating the mold on which a reverse image of the microlens array is transferred.

20. The method of claim 17, wherein the step of duplicating the microlens array includes:
coating a ultraviolet setting resin having fluidity on the transparent substrate;
pressing the ultraviolet setting resin on a surface of the mold where a reverse image of the microlens array is formed;
hardening the ultraviolet setting resin by irradiating ultraviolet rays; and
detaching the transparent substrate where the ultraviolet setting resin is formed from the mold.

21. The method of claim 17, wherein the step of duplicating the microlens array includes:
coating a thermosetting resin having fluidity on the transparent substrate;
pressing the thermosetting resin on a surface of the mold where a reverse image of the microlens array is formed;
hardening the thermosetting resin by heating for a certain time with a certain temperature; and
detaching the transparent substrate where the thermosetting resin is formed from the mold.

22. The method of claim 17, wherein the step of duplicating the microlens array includes:
pressing the transparent substrate on a surface of the mold where a reverse image of the microlens array is formed;
heating the transparent substrate so as to have fluidity and thereby transferring a shape of the microlens array to the transparent substrate; and
cooling the mold and the transparent substrate and detaching the transparent substrate from the mold.

23. The method of claim 17, wherein the step of duplicating the microlens array is performed by an injection molding in which the mold is used as a master and a transparent resin having a certain refractivity is injected onto a surface of the mold where a reverse image of the microlens array is formed with a comparatively high temperature and high pressure.

24. The method of claim 17 further comprising an optical diffuser at an opposite surface to one surface of the microlens array where the microlenses are formed.

25. The method of claim 24, wherein the optical diffuser is formed on the microlens array as a unit by a heating lamination method or by using an index matching adhesive.
